Europäisches Patentamt

European Patent Office

Office européen des brevets

(11) Veröffentlichungsnummer: **0 015 555**
**A1**

(19)

(12) **EUROPÄISCHE PATENTANMELDUNG**

(21) Anmeldenummer: 80101134.7

(22) Anmeldetag: 06.03.80

(51) Int. Cl.³: **F 16 H 55/32**

(30) Priorität: 10.03.79 DE 2909466

(43) Veröffentlichungstag der Anmeldung: **17.09.80**
**Patentblatt 80/19**

(84) Benannte Vertragsstaaten: **BE FR GB IT SE**

(71) Anmelder: **VORWERK & SOHN GmbH. & Co. KG., Obere**
**Lichtenplatzer Strasse 336, D-5600 Wuppertal-Barmen**
**(DE)**

(72) Erfinder: **Bourguignon, Ralf, Kärtner Strasse 61,**
**D-5600 Wuppertal-Vohwinkel (DE)**

(54) **Reibrad mit aus Segmenten bestehendem Laufring.**

(57) Reibrad (6) mit aus mehreren auf dem Radkörper (7) lösbar befestigten (12, 13, 15) Segmenten (8) bestehenden Laufring.

- 1 -

Reibrad mit aus Segmenten bestehendem Laufring

Die Erfindung betrifft ein aus einem Radkörper und damit auswechselbar verbundenen Laufring aus Gummi oder anderen Elastomeren bestehendes Reibrad für den Antrieb von Maschinen.

Reibräder der genannten Art für den Maschinenantrieb sind bekannt. Neben den Reibrädern mit der eigentlichen Antriebsfunktion finden auch solche Reibräder Anwendung, die, wie z.B. beim Antrieb der Trommel einer Holzentrindungsmaschine eine die Trommel tragende Funktion zu übernehmen haben und daher zu mehreren nebeneinander durchgehend oder in Gruppen auf einer gemeinsamen Welle angeordnet sind. Das Auswechseln eines oder mehrerer Reibräder aus Anlaß der Verschleisses oder einer Beschädigung ist bei Verwendung derartiger Reibräder mit zeitraubenden Umständen und großem Aufwand verbunden. Und zwar muß die Trommel zunächst zwecks Entlastung der Reibräder angehoben werden, worauf dann der Ausbau der Antriebseinheit, die Demontage der Reibräder von der Welle und gegebenenfalls die Reifendemontage vom Radkörper erfolgen. Das oder die Ersatzräder sind dann in umgekehrter Reihenfolge der beschriebenen Arbeitsgänge wieder zu montieren.

Diesen Nachteil Rechnung tragend hat sich die vorliegende Erfindung als Aufgabe gestellt; ein Reibrad zu gestalten, das eine wesentlich einfachere und zeitsparendere Demontage und Wiedereinsetzung des Reibrades ermöglicht als die bisher übliche. Und zwar wird die Aufgabe durch die Schaffung eines aus mehreren auf dem Radkörper lösbar befestigten Segmenten bestehenden Laufrings in Form eines Zwillings- oder Mehrfach-Reibrades gelöst, wobei dessen aus Fußverstärkung und darauf aufgebrachten Laufkissen bestehende Segmente mit dem für die Laufringe des Mehrfach-Reibrades gemeinsamen Radkörper durch Verschrauben verbunden und die Segmente der Reibräder jeweils versetzt zueinander angeordnet sind.

Bei einem bevorzugten Ausführungsbeispiel des Reibrades gemäß der Erfindung erfolgt die Schraubbefestigung der Segmente vom Laufsegment her in den Radkörper. Unter anderen Befestigungsmöglichkeiten kann die Schraubbefestigung aber auch vom Radkörper her in das Metallringsegment erfolgen.

Die Anwendung solcher Reibräder erlaubt es mit großer Ersparnis an Arbeitsaufwand, einzelne oder mehrere Reibräder ohne Demontage der Reibräder von der Welle und ohne Entfernen des benutzten Reibrades und Montieren eines neuen Laufrings in der Reifenpresse auszuwechseln. Es bedarf gemäß der Erfindung nur noch des Auswechselns neuer Reibradsegmente.

Die Erfindung wird im folgenden anhand eines durch die Zeichnung dargestellten Ausführungsbeispiels näher erläutert:

Es zeigen:

Fig. 1 ein Zwillingsreibrad gemäß der Erfindung in Seitenansicht,

Fig. 2 dasselbe Zwillingsreibrad in Ansicht von vorn und die

Fig. 3 bis 5 mehrere Schraubbefestigungsarten der Segmente auf dem Radkörper.

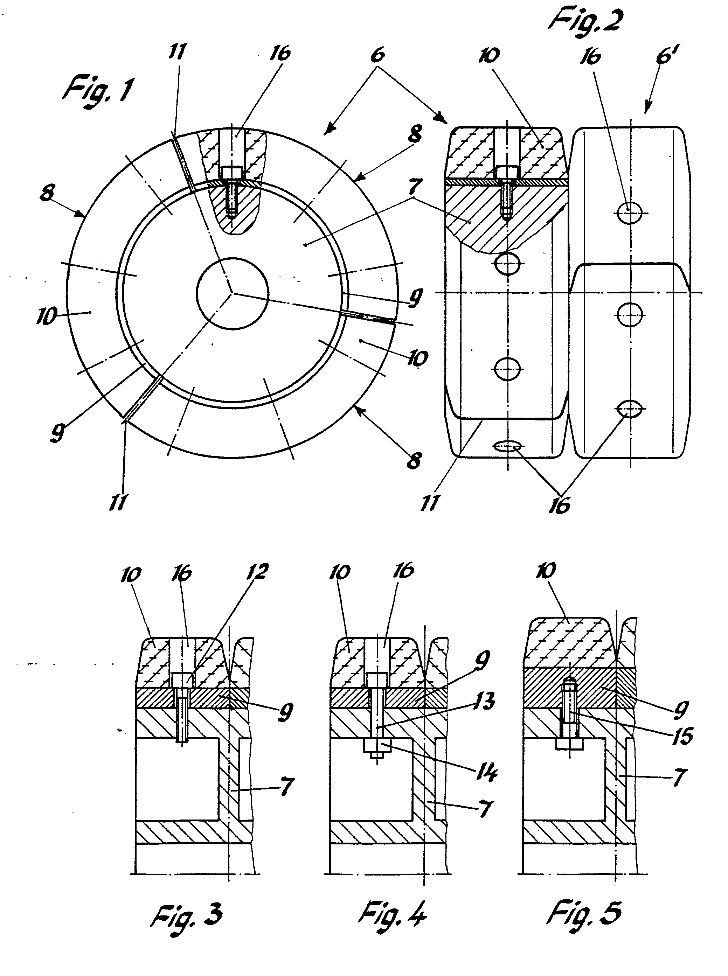

Das Zwillingsreibrad 6 besteht aus dem Radkörper 7 und den auf seinem Umfang lösbar befestigten drei Segmenten 8, die ihrerseits sich aus dem Metallringsegment 9 und dem darauf z.B. durch Vulkanisieren aufgebrachten Laufringsegment 10 zusammensetzen. Durch die Aufteilung des Laufrings in Segmente entstehen naturgemäß an den benachbarten Segmentenden Stoßfugen 11, die, um den Stoß- bzw. Schiebeeffekt im Arbeitsgang des Rades möglichst gering zu halten, nur so breit gehalten werden, daß in Abhängigkeit von der Kissenhöhe des Laufringsegments 10 und der Belastung des Reibrades, zwei benachbarte Segmentenden nicht in Berührung kommen. Um den Stoßeffekt weiter abzudämpfen, sind die Segmente 8 des Reibrades 6, wie die Fig. 2 zeigt, gegenüber den Segmenten des benachbarten Reibrades 6' versetzt zueinander angeordnet, was einer Überbrückung der Stoß- und Schiebewirkung gleich kommt.

Bei den in den Fig. 3 und 4 dargestellten Befestigungsarten der Segmente auf dem Radkörper erfolgt die Verschraubung vom Laufkissen her in den Radkörper, wobei die Befestigung nach Fig. 3 z.B. durch eine Inbusschraube 12 erreicht wird, die Laufringsegment 10 und Metallringsegment 9 mit dem Radkörper 7 verbindet. In Fig. 4 ist der Schaft der Schraube 13 durch eine Mutter 14 von unten her fixiert.

Bei der Fig. 5 erfolgt die Befestigung der Segmente 8 vom Radkörper 7 her in das Metallringsegment 9, wobei die Befestigungsschraube 15 zwar eine Bohrung 16 im Elastomer des Laufringsegments 10 erspart, jedoch ein dickeres Metallringsegment 9 voraussetzt.

Zum Zweck des Auswechselns eines Reibrades bedarf es nur noch des Auswechselns der in diesem Fall durch je drei Schrauben befestigten Segmente.

0015555

Patentansprüche:

1. Aus einem Radkörper und damit auswechselbar verbundenen Laufring aus Gummi oder anderen Elastomeren bestehendes Reibrad für den Antrieb von Maschinen, gekennzeichnet durch einen aus mehreren auf dem Radkörper (7) lösbar befestigten Segmenten (8) bestehenden Laufring in Form eines Zwillings- oder Mehrfach-Reibrades (6, 6'), wobei dessen aus Fußverstärkung und darauf aufgebrachten Laufkissen bestehende Segmente (8) mit dem für die Laufringe des Mehrfach-Reibrades gemeinsamen Radkörper (7) durch Verschrauben verbunden und die Segmente (8) der Reibräder ( 6, 6') jeweils versetzt zueinander angeordnet sind.

2. Segment-Reibrad nach Anspruch 1, dadurch gekennzeichnet, daß die Schraubbefestigung der Segmente (8) vom Laufringsegment (10) her in den Radkörper (7) erfolgt.

3. Segment-Reibrad nach Anspruch 1, dadurch gekennzeichnet, daß die Schraubbefestigung der Segmente (8) vom Radkörper (7) her in das Metallringsegment erfolgt.

Fig. 1

Fig. 2

Fig. 3

Fig. 4

Fig. 5

0015555

Europäisches
Patentamt

**EUROPÄISCHER RECHERCHENBERICHT**

0015555

Nummer der Anmeldung

EP 80 10 1134

| | **EINSCHLÄGIGE DOKUMENTE** | | KLASSIFIKATION DER ANMELDUNG (Int.Cl.⁴) |
|---|---|---|---|
| Kategorie | Kennzeichnung des Dokuments mit Angabe, soweit erforderlich, der maßgeblichen Teile | betrifft Anspruch | F 16 H 55/32 |
| X | BE - A - 511 587 (MAVOR)<br><br>* Seite 2; Figuren *<br><br>-- | 1,2 | |
| | US - A - 1 506 642 (ILER)<br><br>* Seite 1; Figuren *<br><br>---- | 1,3 | |

RECHERCHIERTE
SACHGEBIETE (Int. Cl.⁴)

F 16 H 55/00
          13/00
B 65 G 39/00

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde
   liegende Theorien oder
   Grundsätze

E: kollidierende Anmeldung

D: in der Anmeldung angeführtes
   Dokument

L: aus andern Gründen
   angeführtes Dokument

&: Mitglied der gleichen Patentfamilie, übereinstimmendes
   Dokument

Der vorliegende Recherchenbericht wurde für alle Patentansprüche erstellt.

| Recherchenor. | Abschlußdatum der Recherche | Prüfer |
|---|---|---|
| Den Haag | 06-06-1980 | FLORES |

EPA form 1503.1   06.78